Europäisches Patentamt

European Patent Office

Office européen des brevets

(19)

(11) Publication number: **0 179 519**

A1

(12)

# EUROPEAN PATENT APPLICATION

(21) Application number: **85201623.7**

(22) Date of filing: **07.10.85**

(51) Int. Cl.⁴: **F 16 G 11/00**

(30) Priority: **08.10.84 NL 8403056**

(43) Date of publication of application:
**30.04.86 Bulletin 86/18**

(84) Designated Contracting States:
**CH DE FR GB IT LI NL**

(71) Applicant: **Bibia Rubber B.V.**
**Herenweg 49**
**NL-2105 MC Heemstede(NL)**

(72) Inventor: **Duyker, Christiaan Johannes Hendrik**
**Meidoornplantsoen 23**
**NL-2161 MA Lisse(NL)**

(74) Representative: **Urbanus, Henricus Maria, Ir. et al,**
**c/o Vereenigde Octrooibureaux Nieuwe Parklaan 107**
**NL-2587 BP 's-Gravenhage(NL)**

(54) An elastic fastener.

(57) An elastic fastener for use e.g. on a wheeled container, comprising a strap of elastomeric material having in its one end a hook and on its other end a thickened portion received in an attaching member by means of which said fastener is connectable to a fixed part of a wheeled container. The attaching member (2) includes two shell portions (4, 5) adapted to be indissolubly interconnected by snap means (10-12). The attaching member (2) includes a chamber (9) for receiving the thickened strap end (7) and a slotted opening (8) in the wall extending into said chamber (9) for the passage of the strap portion (3) contiguous with the thickened strap end (7).

FIG.1

FIG.2

0179519

Title: An elastic fastener.

The present invention relates to an elastic fastener for use e.g. on a wheeled container, comprising a strap of elastomeric material having on its one end a hook and on its other end a thickened portion received in an attaching member by means of which the fastener is connectable to a fixed part of a wheeled container.

A similar fastener is known from German Auslegeschrift 1,181,083. That fastener includes a slider having a slot provided therein in which the thickened end of the fastener can be fitted after said end has been wrapped about e.g. an upright of a wheeled container consisting of tubes, thereby forming a loop. Pressing said thickened end through a relatively narrow slot is cumbersome and time-consuming. Moreover, this operation requires the aid of hand tools, such as a screw driver.

It has been proposed already to facilitate this cumbersome assembly by providing near the end of the slot referred to an auxiliary slot transverse to the main slot and having a width corresponding to the thickness of the thickened strap end. Said end can be inserted sideways into the auxiliary slot and subsequently be advanced in the direction of the main slot. Assembly can then take place without auxiliary tools and, moreover, more quickly, but so can the disassembly. This entails drawbacks, for wheeled containers including a set of fasteners are often to be found unattended in warehouses, supermarkets and the like and practice teaches that many container fasteners are detached and taken away by unauthorized persons.

It is an object of the present invention to provide a fastener of the above described type which on the one hand is easy and quick to fit on a wheeled container and which on the other hand cannot be detached therefrom without damaging the fastener, thus rendering it useless. To this end the fastener according to the present invention is characterized in that the attaching member comprises two shell portions arranged to be indissolubly interconnected by snap means, said attaching member including a chamber for receiving the thickened strap end and slotted opening in the wall extending into said chamber for the passage of the strap portion contiguous with the thickened strap end.

In addition to the above advantages - easy and rapid assembly, and disassembly impossible - the fastener according to the present invention offers the benefits of a saving in cost and material, as a shorter strap is necessary for the same working length due to the absence of the attaching loop.

The chamber and the slotted strap outlet are formed preferably by recesses arranged in the two shell portions in mirror-symmetrical interrelationship with reference to the interface. This is advantageous not only in injection moulding the two shell portion, as a result of a simplified die, but also enables the shell portions and the strap to be pre-assembled by interconnecting the snap means proximal to the strap. The shell portions can then be opened to some extent and in this condition be pushed about a tube of a wheeled container after which said snap means can be interconnected on the portion distal to the thickened strap end.

Preferably, each shell portion on the surface opposing the other shell portion, includes two diametrically opposite snap projections adapted to snappingly engage in recesses disposed in the other shell portion, as well as two recesses, also diametrically opposite each other for receiving the two snap projections of the other shell portion.

It is desirable that an attaching member, one fitted on a tube of a wheeled container, can be clampingly held in the place of attachment and on the other hand, is slidable axially of the tube. This can be achieved in an elegant manner by selecting the depth of the chamber for receiving  the thickened strap end and the thickness of said strap end in such a manner that the end face of said thickened strap end lies a short distance within the cylindrical opening enclosed by the two shell portions.

One embodiment of the fastener according to the present invention will now be described, by way of example, with reference to the accompanying drawing, in which:

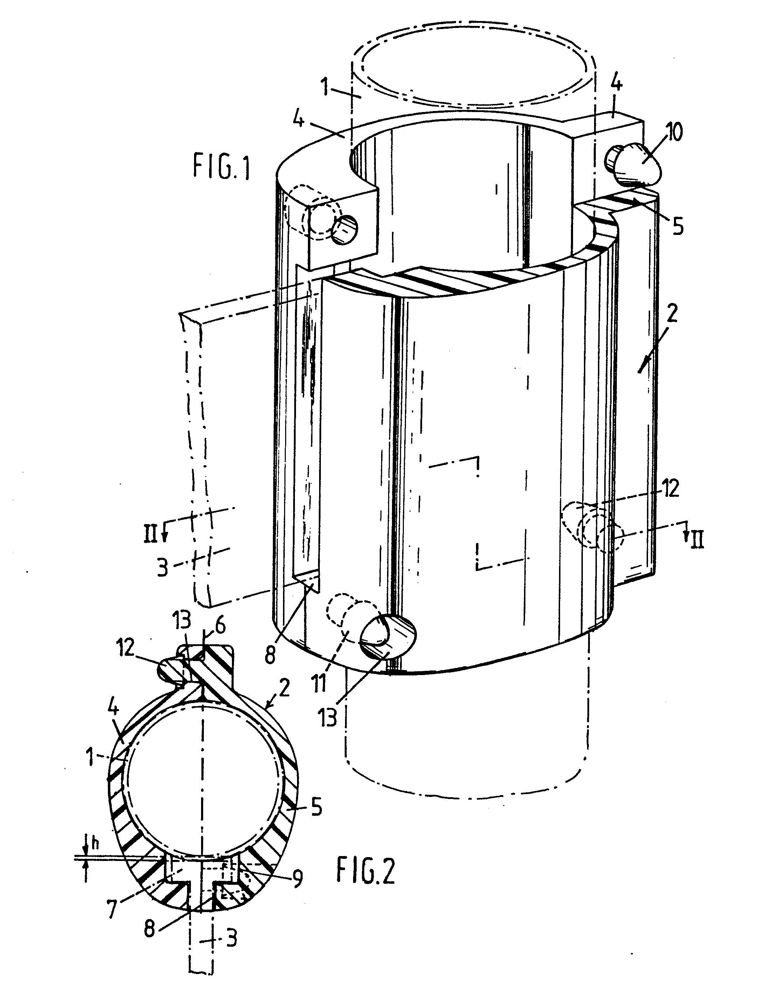

Fig. 1 is a perspective view of an attaching member disposed on a wheeled container tube, with part of said attaching member being removed, for the sake of clearness; and

Fig. 2 is a cross-section on the line II-II of Fig. 1.

Attaching member 2 comprises two shell portions 4,5, together enclosing a cylindrical opening whose diameter approximately corresponds to the diameter of a vertical tube 1 of a wheeled container. The interface between the two shell portions 4, 5 is indicated by reference numeral 6. Both shell portions 4, 5 contain recesses, together forming a chamber 9 for receiving the thickened strap end 7, as well as recesses together forming a slotted opening 8, said slot 8 extending from the outer circumference of the wall into the chamber 9. Strap 3 extends through said slotted opening 8.

On shell portion 4 there are provided two diametrically opposite snap projections 10, 11, consisting conventionally of a short cylindrical rod carrying a conically thickened end. Opposite the snap projections 10, 11 there are provided in the shell portion 5 openings 13 including a short portion having a diameter corresponding to that of the cylindrical portion of snap projection 10, said opening merging into a chamber of larger diameter for receiving the thickened end of snap projection 10, 11. Similarly, two snap projections are provided on shell portion 5, one of which is indicated in the drawing at 12. Snap projections 12 are adapted to engage in two recesses 13 provided in corresponding places in shell portion 4. Accordingly, in the assembled condition, the two shell portions 4, 5 are connected by four snap projections received in corresponding recesses. Disassembly of an attaching member once fitted on a tube of a container is possible only by damaging two snap projections situated on one side of the wheeled container tube, after which the attaching member is useless.

In order to secure the attaching member clampingly and yet slidingly on a container tube, a diameter could be chosen for the cylindrical opening in attaching member 2 which provides for a sliding fit after its attachment to container tube 1. In connection with tolerances this is not easily achieved. Such a sliding fit can be obtained in a substantially simpler manner by adjusting the thickness of the thickened strap end 7 and the depth of the chamber 9 to one another in such a manner that the thickened strap end 7 extends a small distance $\underline{h}$ into the cylindrical opening of the attaching member 2. In practice, said distance $\underline{h}$ is about 1 mm. When securing the attaching member 2 to a container tube 1, the thickened strap end 7 is slightly compressed, so that the attaching member remains in the place once chosen, while it is nevertheless possible to slide attaching member 2 along tube 1.

C L A I M S
=============

1.    An eleastic fastener for use e.g. on a wheeled container, comprising a strap of elastomeric material having on its one end a hook and on its other end a thickened portion receiving in an attaching member by means of which said fastener is connectable to a fixed part of a wheeled container, characterized in that said attaching member (2) includes two shell portions (4, 5) adapted to be indissolubly interconnected by snap means (10-12), said attaching member (2) including a chamber (9) for receiving the thickened strap end (7) and a slotted opening (8) in the wall extending into said chamber (9) for the passage of the strap portion (3) contiguous with said thickened strap end (7).

2.    A fastener according to claim 1, characterized in that the chamber (9) and the slotted strap outlet (8) are formed by recesses in the two shell portions (4, 5), said recesses being arranged in mirror-symmetrical interrelationship with reference to the interface (6) between the two shell portions (4, 5).

3.    A fastener according to claims 1-2, characterized in that each shell portion  (4, 5), on the surface (6) opposite the other shell portion (5, 4), is fitted with two diametrically opposite snap projections (10, 11) adapted to snappingly engage in recesses (13) provided in the other shell portion, as well as two recesses, also diametrically opposite each other, for receiving the two snap projections of the other shell portion.

4.    A fastener according to claims 1-3, characterized in that the depth of the chamber (9) for receiving the thickened strap end (7) and the  thickness of said strap end are chosen in such a manner that the end face of the thickened strap end lies a short distance (h) within the cylindrical opening enclosed by the two shell portions.

0179519

FIG.1

FIG.2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | US-A-3 329 455 (BECKER)<br>* Column 2, line 70 - column 3, line 71; figures 1,2 * | 1 | F 16 G 11/00 |
| Y,D | DE-B-1 181 083 (ESGE-MARBY)<br>* Whole document * | 1 | |
| A | FR-A-2 537 949 (PEDONE) | | |
| A | FR-A-1 025 155 (LAHAYE) | | |
| A | DE-C-1 001 912 (DUIF) | | |

TECHNICAL FIELDS
SEARCHED (Int. Cl.4)

F 16 G
B 62 J
B 62 B
B 60 P
F 16 B

The present search report has been drawn up for all claims

| Place of search<br>THE HAGUE | Date of completion of the search<br>14-01-1986 | Examiner<br>BARON C. |
|---|---|---|